# EUROPÄISCHE PATENTSCHRIFT

(11) **EP 0 416 406 B1**
(45) Veröffentlichungstag und Bekanntmachung des Hinweises auf die Patenterteilung: **20.11.1996**
(21) Anmeldenummer: 90116308.9
(22) Anmeldetag: 25.08.1990
(51) Int. Cl.: C07F 7/16

(54) **Verfahren zur Herstellung von Alkylhalogensilanen**
Process for the preparation of alkylhalosilanes
Procédé de préparation d'alkylhalogénosilanes

(30) Priorität: 08.09.1989 DE 3929865
(43) Veröffentlichungstag der Anmeldung: 13.03.1991
(73) Patentinhaber: BAYER AG, 51368 Leverkusen (DE)
(72) Erfinder: Degen, Bruno, Dr., D-5203 Much (DE); Felder, Kurt. Dr., D-5090 Leverkusen 1 (DE); Licht, Elke, Dr., D-5090 Leverkusen 3 (DE); Wagner, Gebhard, Dr., D-5068 Odenthal (DE)

(56) Entgegenhaltungen:
- EP-A- 0 223 447
- EP-A- 0 273 635
- EP-A- 0 320 260

## Beschreibung

Die vorliegende Erfindung betrifft ein Verfahren zur Herstellung von Alkylhalogensilanen durch Umsetzung von Silicium mit einem Alkylhalogenid in Gegenwart eines Kupferkatalysators und Promotorsubstanzen, wonach als Promotorsubstanzen Phosphor bzw. Phosphorverbindungen in Kombination mit Indium bzw. Indium-Verbindungen und Zink bzw. Zinkverbindungen eingesetzt werden.

Das grundlegende Verfahren zum Herstellen von Methylchlorsilanen ist die direkte Umsetzung von gemahlenem Silicium mit Methylchlorid in Gegenwart von Kupfer als Katalysator. Die Umsetzung ist dem Fachmann als "Rochow-Synthese" bekannt und ist z.B. in der US-PS 2 380 995 beschrieben.

Nach diesem Verfahren erhält man eine Mischung von Methylchlorsilanen, bei der Dimethyldichlorsilan den Hauptanteil stellt. Darüber hinaus bilden sich neben Methyltrichlorsilan weitere Methylchlorsilane wie z.B. Trimethylchlorsilan, Methylhydrogendichlorsilan und höhersiedende Methylchlordisilane.

Seit der Entwicklung dieses Syntheseweges hat es eine Vielzahl von Aktivitäten gegeben, die sich damit beschäftigten, dieses Verfahren zu verbessern und den Anteil an Dimethyldichlorsilan zu erhöhen, d.h. die Synthese möglichst selektiv im Hinblick auf die Bildung von Dimethyldichlorsilan zu führen. Letzteres erreicht man vor allem durch das Beachten von Reinheitskriterien bezüglich der Rohstoffe und durch den gezielten Einsatz von Promotoren. Auf den Einsatz von Promotoren konzentrieren sich gerade in jüngster Zeit einige Arbeiten, von denen hier beispielhaft folgende genannt seien:
DE-A 3 425 424, EP-A 138 678, EP-A 138 679, DE-A 3 501 085, EP-A 191 502, EP-A 194 214, EP-A 195 728, EP-A 223 447 und US-PS 4 762 940.

Aufgabe der vorliegenden Erfindung war es ebenfalls, den Prozeß möglichst selektiv in Bezug auf Dimethyldichlorsilan zu führen. Als Maß hierfür wird in der Literatur meist das Verhältnis von Methyltrichlorsilan zu Dimethyldichlorsilan (T/D) angegeben. Aufgabe der vorliegenden Erfindung ist es aber darüber hinaus auch gewesen, gleichzeitig den Gehalt der sonstigen Nebenprodukte wie z.B. Trimethylchlorsilan oder der höhersiedenden Methylchlordisilane zu reduzieren.

Gemäß der vorliegenden Erfindung werden dazu entweder dem Katalysator Phosphor oder feste Phosphorverbindungen, bevorzugtermaßen Kupferphosphid der Formel Cu₃P oder dem Methylchlorid gasförmige Phosphorverbindungen wie z.B. Phosphortrichlorid zugemischt, wobei gleichzeitig Kupferlegierungen CuₓM_{y} mit M = In und gegebenenfalls zusätzlich M = Al und Zink oder Zinkverbindungen dem Katalysator zugesetzt werden. Das Verhältnis von x zu y beträgt vorzugsweise 10:1 bis 1:1.

Bereits in der DP-PS 1 165 026 wird beschrieben, daß mit den Elementen Phosphor, Arsen, Antimon, Wismut, Indium, Thallium und Gallium Einfluß auf den Verlauf der Direktsynthese genommen werden kann. Die bevorzugte Ausführungsform, nämlich die Dotierung des Siliciums mittels eines Sinterprozesses, ist allerdings sehr energieaufwendig und entspricht nicht mehr dem Stand der Technik. Einen ähnlichen Prozeß beschreibt die russische Patentschrift Nr. 754 895, auch hier wird Phosphor zusammen mit Kupfer und Silicum einem Sinterprozeß unterzogen.

In React. Solids, Proc. Int. Symp. 10th, 1984, Part B (1985), Seiten 941-946 beschreiben J.G.M. Becht et al., daß Phosphor die Diffusion von Kupfer in Silicum unter Bildung von Cu₃Si katalysiert. Es liegt also nahe, dem Rohstoff Silicium bei der Herstellung Phosphor in der gewünschten Menge zuzusetzen, wie dies in den beiden Anmeldungen EP-A 272 860 und EP-A 273 635 beansprucht wird. Wesentlich eleganter ist es allerdings, den Phosphor in Form von gasförmigen Phosphorverbindungen dem Methylchloridstrom bei der Durchführung der Direktsynthese von Methylchlorsilanen beizumischen. Diese Verfahrensweise ist wesentlich flexibler, einfacher und macht den Silanproduzenten unabhängiger von der Siliciumqualität und stellt somit einen erheblichen technischen Fortschritt dar.

EP-A 223 447 und US-PS 4 762 940 zeigen, daß der Promotoreffekt des Phosphors besonders vorteilhaft genutzt werden kann, wenn man dem Katalysator neben dem üblichen Zinkpromotor eine Kombination aus Phosphor, einem Phosphid oder einer Verbindung, die ein Phosphid bilden kann, und Zinn oder einer Zinnverbindung bzw. Arsen oder einer Arsenverbindung anstelle von Zinn oder einer Zinnverbindung zumischt.

Bei Zinn handelt es sich um ein höheres homologes Element des Siliciums und bei Arsen um ein solches von Phosphor. Umso überraschender und vollkommen neu ist die Tatsache, daß Phosphor in Kombination mit Zink oder Zinkverbindungen und Elementen der dritten Hauptgruppe, insbesondere mit Indium und gegebenenfalls Aluminium, eine deutliche Verbesserung sowohl bei der Reaktivität als auch bei der höheren Ausbeute an Dimethyldichlorsilan bewirkt, die insbesondere verbunden ist mit einer geringeren Menge an Methyltrichlorsilan, Trimethylmonochlorsilan und unerwünschten Methylchlordisilanen.

In der DP-PS 1 165 026 wird zwar beschrieben, daß mit steigendem Indium-Gehalt der Gehalt an Dimethyldichlorsilan steigt. Wie eigene Vergleichsversuche aber zeigten, wird durch die Anwesenheit von Indium der Methylchlordisilan-Gehalt stark erhöht.

Der Einsatz von Aluminium wird schon in der Übersichtsliteratur, z.B. in "Organohalosilanes-Precursors to Silicones", Elsevier Publishing Company, (1967) Amsterdam, Niederlande, von R. Voorhoeve beschrieben. Aluminium ist eines der Elemente, bei dem die Ergebnisse eindeutig interpretiert werden: Man findet eine Beschleunigung der Reaktion. Die DE-OS 3 501 085 beansprucht eine Katalysatorzusammensetzung, die vor allem durch die gleichzeitige Anwesenheit von Zinn bzw. Zinnverbindungen und Aluminium bzw. Aluminiumverbindungen gekennzeichnet ist.

Die vorliegende Erfindung betrifft nun ein Verfahren zur Herstellung von Alkylhalogensilanen aus Silicium und einem Alkylhalogenid in Gegenwart von einem Kupferkatalysator und Promotorsubstanzen, welches dadurch gekennzeichnet ist, daß als Promotorsubstanzen Phosphor oder Phosphorverbindungen in Kombination mit Indium oder Indiumverbindungen und Zink oder Zinkverbindungen eingesetzt werden.

In einer bevorzugten Ausführungsform der vorliegenden Erfindung setzt man Phosphor entweder in Form gasförmiger Verbindungen dem Methylchlorid oder in Form intermetallischer Phasen, z.B. Cu₃P, der Katalysator/ Promotormischung zu.

In einer bevorzugten Ausführungsform der Erfindung wird zusätzlich Aluminium oder eine Aluminiumverbindung eingesetzt.

Aluminium wird in Form eines gezielt erhöhten Aluminiumgehaltes im eingesetzten Silicium oder aber vorzugsweise in Form einer intermetallischen Phase, gebunden an Kupfer, eingesetzt. Besonders geeignet ist hier die Phase Cu₉Al₄.

Indium wird vorzugsweise in Form des Elementes oder ebenfalls gebunden an Kupfer in einer intermetallischen Phase eingesetzt.

Gemäß der vorliegenden Erfindung kommen Katalysator/Promotorsysteme zum Einsatz, bei denen neben Kupferkatalysator und Zinkpromotor auch
- 50-1000 ppm,: bevorzugt 100-500 ppm Phosphor, gerechnet als Element und bezogen auf Silicium und
- 50-5000 ppm,: vorzugsweise 100-1000 ppm Aluminium, gerechnet als Element und bezogen auf Silicium und
- 30-500 ppm: Indium, gerechnet als Element und bezogen auf Silicium enthalten sind.

Die Anwendung der vorliegenden Erfindung ist nicht beschränkt auf eine bestimmte Verfahrenstechnik bei der Direktsynthese. So kann die Reaktion diskontinuierlich oder kontinuierlich geführt werden, es kann sowohl im Fließbett, im Rührbett als auch im Festbett gearbeitet werden.

Die nachfolgenden Beispiele sollen die vorliegende Erfindung näher illustrieren, sind aber keinesfalls einschränkend zu verstehen (%-Angaben bedeuten Gew.-%).

In einem Rührbettreaktor aus Glas, innerer Durchmesser = 30 mm, der mit einem Spiralrührer ausgestattet ist, wurden alle folgenden Experimente durchgeführt. Dabei wurde immer die gleiche Menge Silicium der gleichen Kornverteilung von 71 bis 160 µm eingesetzt.

Methylchlorid wurde unter einem Druck von 2 bar von unten über eine Glasfritte durch die Kontaktmasse geleitet. Die Methylchloridmenge wurde konstant gehalten und betrug in allen Fällen ca. 1,8 l/h bei 2 bar. Nach dem Aufheizen und Anspringen der Reaktion wurde eine stationäre Versuchsphase bei 300°C eingestellt und unter so festgelegten Bedigungen die Menge und Zusammensetzung pro Zeiteinheit an gebildeter Rohsilanmischung bestimmt. Die angegebenen Werte sind immer Mittelwerte aus vier Einzelbestimmungen unter konstant gehaltenen Randbedingungen von: 2 bar, 1,8 l/h Methylchlorid und 300°C.

Die Kontaktmasse bestand aus jeweils
- 40 g Silicium.: Das Silicium enthielt folgende Verunreinigungen:
0,34 % Eisen; 0,17 % Aluminium,
0,15 % Calcium; 0,04 % Titan; 0,005 % Phosphor),
3,2 g Kupferkatalysator (teilweise oxidiertes Cu), 0,05 g ZnO.

Zu dieser Grundmischung, die immer konstant gehalten wurde, wurden gemäß der vorliegenden Erfindung die weiteren Promotorzusätze zugegeben und vor dem Einsatz homogenisiert.

### Beispiel 1

Beispiel 1 zeigt die Wirkung von Phosphor/Indium-Kombinationen:

| | Versuch 1 | Versuch 2 |
|---|---|---|
| Silicium: | 40 g | 40 g |
| Katalysator: | 3,2 g | 3,2 g |
| Zinkoxid: | 0,05 g | 0,05 g |
| Indium: | Metall 0,004 g (entspricht 100 ppm) | Cu₃In 0,0133 g (entspricht 125 ppm) |
| Phosphor: | Cu₃P 0,056 g (entspricht 200 ppm) | Cu₃P 0,028 g (entspricht 100 ppm) |

| Ergebnis: | Prod.-rate (g/h) | Mono (%)* | Tri/Di | PS (%)** |
|---|---|---|---|---|
| Versuch 1 | 6,0 | 1,7 | 0,017 | 3,7 |
| Versuch 2 | 7,3 | 1,6 | 0,017 | 3,5 |
| Mono: Trimethylmonochlorsilan Tri/Di: Methyltrichlorsilan/Dimethyldichlorsilan PS: Polysilane, insbesondere Disilane | | | | |

| | | | | |
|---|---|---|---|---|
| *: Gew.-% bezogen auf monomere Silane | | | | |
| **: Gew.-% bezogen auf gesamte Rohsilanmischung | | | | |

### Vergleichsbeispiel

Das Vergleichsbeispiel zeigt die Wirkung der Phosphor/Aluminium-Kombinationen:

| | Versuch 3 | | Versuch 4 |
|---|---|---|---|
| Silicium | 40 g | | 40 g |
| Katalysator | 3,2 g | | 3,2 g |
| Zinkoxid | 0,05 g | | 0,05 g |
| Aluminium; Cu/Al 80/20 | 0,0212 g (entspricht 100 ppm) | Cu₉Al₄ (entspricht 84 ppm) | 0,0212 g |
| Phosphor; Cu₃P | 0,056 g (entspricht 200 ppm) | Cu₃P (entspricht 100 ppm) | 0,028 g |

| Ergebnis | Prod.-rate (g/h) | Mono (%)* | Tri/Di | PS (%)** |
|---|---|---|---|---|
| Versuch 3 | 5,50 | 1,3 | 0,020 | 2,6 |
| Versuch 4 | 6,75 | 1,4 | 0,039 | 2,2 |
| Mono: Trimethylmonochlorsilan Tri/Di: Methyltrichlorsilan/Dimethyldichlorsilan PS: Polysilane, insbesondere Disilane | | | | |

| | | | | |
|---|---|---|---|---|
| *: Gew.-% bezogen auf monomere Silane | | | | |
| **: Gew.-% bezogen auf gesamte Rohsilanmischung | | | | |

### Vergleichsbeispiele

Bei diesen Vergleichsversuchen fehlt jeweils ein Element der Kombination:

| | Versuch 5 | | Versuch 6 | Versuch 7 |
|---|---|---|---|---|
| Silicium | 40 g | | 40 g | 40 g |
| Katalysator | 3,2 g | | 3,2 g | 3,2 g |
| Zinkoxid | 0,05 g | | 0,05 g | 0,05 g |
| Aluminium | - | Cu₉Al₄ (entspricht 84 ppm) | 0,0212 g | - |
| Indium:Metall | 0,004 g (entspricht 100 ppm) | | - | - |
| Phosphor | - | | - | Cu₃P 0,056 g (entspricht 200 ppm) |

| Ergebnis | Prod.-rate (g/h) | Mono (%)* | Tri/Di | PS (%)** |
|---|---|---|---|---|
| Versuch 5 | 6,50 | 3,5 | 0,039 | 6,0 |
| Versuch 6 | 7,90 | 1,8 | 0,056 | 2,7 |
| Versuch 7 | 5,40 | 2,4 | 0,027 | 3,0 |
| Mono: Trimethylmonochlorsilan Tri/Di: Methyltrichlorsilan/Dimethyldichlorsilan PS: Polysilane, insbesondere Disilane | | | | |

| | | | | |
|---|---|---|---|---|
| *: Gew.-% bezogen auf monomere Silane | | | | |
| **: Gew.-% bezogen auf gesamte Rohsilanmischung | | | | |

Die Vergleichsbeispiele zeigen, daß bei dem separaten Einsatz der einzelnen Elemente als Promotoren nie gleichzeitig das Optimum aller beurteilten Größen, Produktionsrate, Mono-Gehalt, Tri/Di-Verhältnis und Gehalt an hochsiedenden Bestandteilen im Rohsilan erreicht wird.

### Beispiel 2

| | | Versuch 8 | |
|---|---|---|---|
| Silicium | | 40 g | |
| Katalysator | | 3,2 g | |
| Zinkoxid | | 0,05 g | |
| Aluminium | Cu₉Al₄ | 0,0212 g | (entspricht 84 ppm) |
| Indium | Cu₃In | 0,0133 g | (entspricht 125 ppm) |
| Phosphor | Cu₃P | 0,028 g | (entspricht 100 ppm) |

| Ergebnis | Prod.-rate (g/h) | Mono (%)* | Tri/Di | PS (%)** |
|---|---|---|---|---|
| Versuch 8 | 6,53 | 1,65 | 0,038 | 4,8 |
| Mono: Trimethylmonochlorsilan Tri/Di: Methyltrichlorsilan/Dimethyldichlorsilan PS: Polysilane, insbesondere Disilane | | | | |

| | | | | |
|---|---|---|---|---|
| *: Gew.-% bezogen auf monomere Silane | | | | |
| **: Gew.-% bezogen auf gesamte Rohsilanmischung | | | | |

## Patentansprüche

1. Verfahren zur Herstellung von Alkylhalogensilanen aus Silicium und Alkylhalogenid in Gegenwart eines Kupferkatalysators und Promotorsubstanzen, dadurch gekennzeichnet, daß als Promotorsubstanzen Phosphor bzw. Phosphorverbindungen in Kombination mit Indium bzw. Indium-Verbindungen und mit Zink oder Zinkverbindungen eingesetzt werden.

2. Verfahren nach Anspruch 1, dadurch gekennzeichnet, daß als weitere Promotorsubstanzen Aluminium bzw. Aluminiumverbindungen eingesetzt werden.

3. Verfahren nach Anspruch 1 oder 2, dadurch gekennzeichnet, daß Phosphor in Form gasförmiger Verbindungen dem Alkylhalogenid zugesetzt wid.

4. Verfahren nach einem der Ansprüche 1-3, dadurch gekennzeichnet, daß das Indium bzw. Aluminium in Form intermetallischer Phasen - gebunden an Kupfer - eingesetzt wird.

## Claims

1. A process for preparing alkylhalosilanes from silicon and an alkyl halide in the presence of a copper catalyst and promoters, characterised in that phosphorus or phosphorus compounds combined with indium or indium compounds and with zinc or zinc compounds are used as promoters.

2. A process according to Claim 1, characterised in that aluminium or aluminium compounds are used as further promoters.

3. A process according to Claim 1 or 2, characterised in that phosphorus is added in the form of gaseous compounds to the alkyl halide.

4. A process according to one of Claims 1 - 3, characterised in that indium or aluminium is used in the form of intermetallic phases, bonded to copper.

## Revendications

1. Procédé de préparation d'alkylhalogénosilanes à partir du silicium et d'un halogénure d'alkyle en présence d'un catalyseur au cuivre et d'activateurs, caractérisé en ce que l'on utilise en tant qu'activateurs le phosphore ou des dérivés du phosphore en combinaison avec de l'indium ou des dérivés de l'indium et avec du zinc ou des dérivés du zinc.

2. Procédé selon la revendication 1, caractérisé en ce que l'on utilise en tant qu'autres activateurs l'aluminium ou des dérivés de l'aluminium.

3. Procédé selon la revendication 1 ou 2, caractérisé en ce que le phosphore est ajouté à l'état de dérivé gazeux à l'halogénure d'alkyle.

4. Procédé selon une des revendications 1 à 3, caractérisé en ce que l'indium ou l'aluminium est mis en oeuvre à l'état de phase intermétallique - fixé sur le cuivre.
